Europäisches Patentamt

European Patent Office

Office européen des brevets

(19)

(11) Numéro de publication: **0 277 448 B1**

## (12) FASCICULE DE BREVET EUROPEEN

(45) Date de publication de fascicule du brevet: **04.03.92**   (51) Int. Cl.⁵: **A23B 4/10**, A23P 1/08

(21) Numéro de dépôt: **87403012.5**

(22) Date de dépôt: **30.12.87**

Le dossier contient des informations techniques présentées postérieurement au dépôt de la demande et ne figurant pas dans le présent fascicule.

(54) **Agent comestible de pelliculage alimentaire, procédé d'enrobage des aliments avec cet agent et application à la conservation des aliments.**

(30) Priorité: **30.12.86 FR 8618349**

(43) Date de publication de la demande:
**10.08.88 Bulletin 88/32**

(45) Mention de la délivrance du brevet:
**04.03.92 Bulletin 92/10**

(84) Etats contractants désignés:
**AT BE CH DE ES FR GB GR IT LI LU NL SE**

(56) Documents cités:
**WO-A-86/05363          BE-A- 511 831
CH-A- 650 129           DE-A- 1 492 591
FR-A- 1 225 769         GB-A- 2 036 535
US-A- 3 669 688         US-A- 4 197 325
US-A- 4 272 557**

**F.S.T.A. 71016161 PATENT, Coating Process, 1970**

**F.S.T.A. 71022397 PATENT, Coating Compositions, 1970**

**JOURNAL OF FOOD SCIENCE, vol. 46, no. 4, juillet/août 1981, pages 1010,1011, Chicago,**

Illinois, US; D.R. SUDERMAN et al.: "Factors affecting adhesion of coating to poultry skin: effects of various protein and gum sources in the coating composition"

(73) Titulaire: **SANOFI BIO INDUSTRIES
66, avenue Marceau
F-75008 Paris(FR)**

(72) Inventeur: **Rizzoti, Robert
Résidence Champfleuri
F-50500 Carentan(FR)**
Inventeur: **Tilly, Gérard
4 cité Auby
F-50500 Carentan(FR)**

(74) Mandataire: **Gillard, Marie-Louise et al
Cabinet Beau de Loménie 55, Rue d'Amsterdam
F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un nouvel agent comestible de pelliculage des aliments, le procédé d'enrobage de ceux-ci et l'amélioration de la présentation, de la protection et de la conservation des aliments au moyen de ce pelliculage.

On connaît différentes techniques de protection des aliments dont la plus courante est leur emballage dans des feuilles de papiers enrobés de polymères, comme le polyéthylène, ou de métaux, comme l'aluminium ; mais ces feuilles sont plus ou moins souples et n'adhèrent souvent que partiellement aux aliments et morceaux d'aliments. On utilise aussi de la paraffine pour certains fromages ou des couches de gelées ou barde pour les produits de charcuterie.

On a maintenant trouvé un nouvel agent de pelliculage, comestible, adhérent parfaitement sur toute la surface de la pièce où il sera déposé, qui peut être appliqué sur toute sorte d'aliments périssables, quelle que soit leur forme, par un procédé simple, tel que le trempage, le badigeonnage ou la pulvérisation.

Les caractéristiques filmogènes de cet agent de pelliculage sont telles que la pellicule obtenue, d'aspect brillant, agréable à l'oeil, peut être, si cela est souhaité, éliminée avant l'utilisation alimentaire du produit par pelgage ou par dissolution à chaud.

On a déjà décrit des gels alimentaires constitués de protéines et polysaccharides. Une étude de la nature des interactions en fonction du type de protéine et du polysaccharide a été publiée par exemple dans Food Chemistry 6 (1980) pages 3 à 14, mais les intéressantes propriétés filmogènes de certains de ces gels et leur utilisation pour former de fines pellicules protectrices des aliments périssables n'avaient pas été décrites jusqu'à présent.

L'addition de polysaccharides aux agents gélifiants n'a en effet été préconisée que dans des applications faisant appel au pouvoir gélifiant et épaississant du mélange et par exemple pour améliorer la tenue des mousses au chocolat industrielles ou encore pour élever la température de fusion des gels de couverture en charcuterie.

La demande WO 86/05363 décrit une composition alimentaire colorée non collante constituée d'une émulsion contenant de l'huile, on colorant, un gélifiant comprenant un carraghénane et de l'eau. Cette composition, qui peut être enrobée, a pour effet d'empêcher la migration du colorant dans cet enrobage. N'étant pas adhérante, elle ne peut être utilisée comme agent de pelliculage d'aliments.

Le brevet FR 1 225 769 décrit une matière d'enrobage de produits alimentaires secs se présentant sous forme de grains constituée d'une gomme soluble dans l'eau, un colorant végétal et une très faible quantité de gélatine. La quantité de gélatine préconisée, de l'ordre de 0,5 % en poids, permet de rendre la composition non collante sur elle-même et empêche les grains qui en sont enrobés de s'agglutiner.

L'agent de pelliculage pelable selon l'invention peut contenir de la gélatine, un polysaccharide, ainsi que de l'eau et est exempt d'huile. Il peut éventuellement contenir également des additifs alimentaires habituels, tels que colorants alimentaires, antioxydants ou agents de conservation et agents de sapidité.

Pour améliorer les propriétés filmogènes de l'agent de pelliculage selon l'invention, on préfère qu'il contienne aussi un plastifiant compatible, tel qu'un polyol et tout spécialement le glycérol ou le sorbitol.

Dans le cas de certains polysaccharides, la présence d'un agent de réticulation alimentaire est nécessaire à la prise du gel et il sera ajouté après dépôt du film sur la pièce à traiter.

Les gélatines utilisées dans l'agent de pelliculage de l'invention sont celles habituellement employées dans le domaine alimentaire, c'est-à-dire sont celles dont le nombre de Bloom est compris entre 100 et 300. La gélatine doit être compatible avec le polysaccharide auquel elle sera mélangée, c'est-à-dire qu'elle ne doit pas former d'agrégats insolubles ; ces phénomènes ont été largement décrits et l'homme du métier pourra effectuer sans difficultés le choix convenable des 2 constituants de l'agent de pelliculage.

Il est bien entendu que l'on peut utiliser comme gélatine un produit naturel, ou un mélange de gélatine naturelle et de gélatine dépolymérisée par des moyens connus. De tels mélanges, avec lesquels on peut préparer des agents de pelliculage selon l'invention, ayant un fort taux d'extrait sec impliquent de choisir spécifiquement les proportions relatives des constituants ; ils permettent de prolonger la durée de conservation du film déposé, tout comme le permet l'addition de NaCl dans le produit final.

Les polysaccharides selon l'invention peuvent être choisis parmi l'un quelconque des polysaccharides épaississants et gélifiants, sulfatés ou non, bien connus dans le domaine alimentaire. On peut citer les carraghénanes, extraites d'algues rouges, les acides alginiques et leurs sels, extraits d'algues brunes, les galactomannanes et principalement le guar et la caroube, les pectines provenant d'agrumes, de pommes ou de betteraves, ou encore les xanthanes excrétés par la bactérie Xanthomonas campestris.

Les mélanges de polysaccharides compatibles peuvent aussi être utilisés, comme les mélanges de carraghénane et de caroube, de xanthane et de caroube, les mélanges de ces trois composés, ou encore les mélanges d'alginates et de pectines.

Parmi les alginates, on préfère ceux à haute teneur en acide guluronique.

Le plastifiant, qui peut être présent dans l'agent de pelliculage, améliorera la souplesse du film et sa tenue à la déshydratation ; c'est un produit hydrophile alimentaire ; on préfère tout particulièrement un polyol, comme le glycérol ou le sorbitol.

Les proportions des différents constituants dans l'agent de pelliculage peuvent varier dans une large mesure et seront fonction de la nature des produits associés et des propriétés de l'agent de pelliculage que l'on veut obtenir et par exemple de la température de gélification, de la viscosité de la solution à appliquer, de la résistance et de la souplesse du film, ainsi que de la nature du support.

Le pourcentage d'extrait sec, en poids de l'agent de pelliculage, peut être compris entre 10 et 50 %, pour une application de l'agent de pelliculage sur les fromages cuits ou fermentés, et entre 10 et 25 % pour les viandes, les poissons, les légumes et les fruits ; on préfère en effet avoir un pourcentage d'humidité dans le film d'enrobage proche de celui de l'aliment enrobé afin d'assurer une bonne adhérence du film.

Les proportions relatives de la gélatine et du polysaccharide dépendent de la qualité de la gélatine et de la nature du polysaccharide ; le poids de gélatine est en général de 3 à 10 fois supérieur à celui du polysaccharide ; leur rapport est ajusté de telle sorte que le film obtenu soit résistant et ait une cohésion permettant son pelage.

Dans le cas des carraghénanes, les mélanges contenant 5 à 30 % en poids de carraghénane par rapport à la gélatine donnent de bons résultats, même en l'absence de plastifiant ; on préfère toutefois un agent de pelliculage contenant, en poids par rapport au poids total de l'agent, de 0,5 % à 2 % de carraghénane, de 10 % à 30 % de polyol, de 6 % à 10 % de gélatine, outre des additifs habituels et de l'eau.

Dans le cas des alginates, on utilisera en général des mélanges contenant de 8 % à 20 % en poids d'alginates par rapport à la gélatine. On utilisera de préférence des mélanges à faible taux de polysaccharides pour diminuer le prix de revient de l'agent de pelliculage, ce taux devant toutefois être suffisant pour assurer les propriétés filmogènes de l'agent de pelliculage.

Pour permettre le dépôt d'un film assez fin par trempage ou pulvérisation, la viscosité de l'agent de pelliculage devra être comprise entre $10^{-1}$ et 1 Pa.s à la température d'utilisation.

Enfin, la quantité de polysaccharide sera choisie de telle sorte que la température de gélification spontanée au refroidissement de l'agent de pelliculage soit supérieure à la température ambiante, c'est-à-dire comprise entre 35°C et 90°C et de préférence vers 70°C, pour que la gélification soit immédiate, dès le dépôt du film sur la pièce à revêtir qui sera en général à température ambiante ; dans le cas de solutions de gélatine seules, ou en présence de très faibles proportions de polysaccharides, il serait nécessaire de refroidir la pièce pour accélérer la prise, compte tenu des températures de gélification basses.

Lorsqu'on utilise un alginate comme polysaccharide, la prise du gel n'est pas spontanée au refroidissement, mais a lieu en présence d'ions calcium. On peut traiter la pièce, après l'avoir revêtue de l'agent de pelliculage, avec une solution aqueuse de chlorure de calcium par trempage ou pulvérisation, ce qui donne une consolidation pratiquement immédiate du film déposé.

Lorsqu'on utilise des pectines comme polysaccharides, elles doivent être faiblement méthylées ou préalablement modifiées et il est aussi nécessaire de traiter par les ion $Ca^{++}$ pour assurer la prise du gel.

Un autre objet de l'invention est le procédé de pelliculage simple et rapide des denrées alimentaires qui consiste à appliquer autour de la pièce un film de 0,5 à 3 mm d'épaisseur par trempage, pulvérisation ou badigeonnage, ces deux dernières méthodes étant préférées dans le cas des pièces de grande taille, comme les carcasses d'animaux après l'abattage. Ainsi, on peut tremper quelques instants la pièce à enrober dans l'agent de pelliculage maintenu à une température supérieure à sa température de gélification. Le film prend en général dès le retrait de la pièce du bain, mais on peut en accélérer le durcissement en le soumettant à un courant d'air.

Dans le cas des polysaccharides réticulables en présence de calcium, il faudra tremper successivement la pièce dans un bain d'agent de pelliculage et dans une solution aqueuse de chlorure de calcium, ou encore pulvériser la solution de $Ca^{++}$ sur la pièce après son trempage dans le bain.

Ce procédé convient pour l'enrobage et la protection de pièces de forme et de nature très diverses comme des viandes fraîches ou cuites, telles que rôtis, volailles ou jambon, ou encore des poissons, frais ou surgelés, ou des fromages. Le trempage est préféré dans le cas de pièces de forme très irrégulière.

Quelle que soit la méthode d'application choisie, elle sera d'autant plus facile à réaliser au stade industriel qu'elle n'implique pas la présence d'un ensemble de réfrigération complexe.

Un autre objet de l'invention est l'application de l'enrobage avec un agent de pelliculage selon l'invention, à la protection des aliments contre le desséchement, l'oxydation et les contaminations bactériennes, ce qui permet d'augmenter la durée de conservation de ces denrées.

Dans ce qui suit, divers exemples de réalisation et de mise en oeuvre de l'invention sont décrits.

Exemple 1 : Enrobage d'un fromage de type Brillat-Savarin (gel ayant un taux d'extrait sec de 45 à 48%)

On disperse dans 50 g d'eau, 6 g de gélatine d'indice de Bloom 150 et 1 g de carraghénane ; le mélange est porté à 60°C et on introduit 20 g de sorbitol ou de glycérol et 3 g de sel NaCl, puis on porte quelques minutes le mélange à 90°C pour le pasteuriser. L'agent de pelliculage ainsi préparé a un point de gélification de 73-75°C. Il peut être refroidi et conservé à l'abri des contaminations bactériennes ou directement utilisé après refroidissement vers 80°C environ. La viscosité des bains dans lesquels on plonge les fromages est de 600 à 700mPa.s Le gel prend dès le retrait du bain. La pellicule déposée a une épaisseur de 1,5 mm.

Exemple 2 : Enrobage de poissons entiers frais, tels que truites et maquereaux (gel ayant un taux d'extrait sec de 20 %)

On disperse 1 g de carraghénane et 8 g de gélatine (Bloom 150) dans 79 g d'eau. On porte à 60°C et introduit 12 g de glycérol et pasteurise le mélange à 90°C.

L'agent de pelliculage obtenu a une viscosité à 80°C de 40-100mPa.s.et une température de gélification de 50-52°C. Par trempage court, on dépose sur les poissons une pellicule de 0,5 mm d'épaisseur.

On a constaté que ces poissons conservés dans les conditions habituelles ne présentaient aucune odeur lorsqu'on pelait la pellicule, ou la dissolvait dans l'eau chaude, 4 à 5 jours après son dépôt, contrairement aux poissons témoins, non revêtus.

Exemple 3 : Enrobage de morceaux de viande de boeuf, de porc ou de volailles (gel ayant un extrait se de 20 % environ)

On solubilise, sous agitation, dans 79 g d'eau à 60°C 1 g d'alginate de sodium, avant d'introduire 7,5 g de gélatine et 12,5 g de glycérine, et chauffe vers 85°C pour pasteuriser la solution. Cette solution peut être utilisée en bain de trempage entre 80°C et 40°C ; à 80°C, le bain a une viscosité de 125mPa.s, à 40°C de 280mPa.s.Les pièces de viande sont plongées successivement dans ce bain, puis dans une solution aqueuse, à température ambiante, de chlorure de calcium à 4 % (p/V).

On peut aussi utiliser la solution pour enrober des carcasses de viande, en effectuant une première pulvérisation de la solution à 30°C environ, suivie d'une légère pulvérisation d'une solution aqueuse de chlorure de calcium à 4 %.

**Revendications**
**Revendications pour les Etats contractants suivants : DE, GB, FR, IT, NL, SE, CH/LI, BE, AT, LU, GR**

1. Agent de pelliculage alimentaire pelable, à base de gélatine, d'un polysaccharide épaississant ou élifiant et d'eau, caractérisé en ce qu'il contient en poids 3 à 10 fois plus de gélatine que de polysaccharide et en ce qu'il est exempt d'huile.

2. Agent de pelliculage selon la revendication 1, caractérisé en ce qu'il contient en outre un polyol plastifiant.

3. Agent de pelliculage selon l'une des revendications 1 ou 2, caractérisé en ce qu'il contient en outre des additifs alimentaires, choisis parmi les colorants alimentaires, les agents de conservation et les agents de sapidité.

4. Agent de pelliculage selon l'une quelconque des revendications 2 ou 3, caractérisé en ce que le polyol est le glycérol ou le sorbitol.

5. Agent de pelliculage selon l'une quelconque des revendications 1 à 4, caractérisé en ce que le polysaccharide est choisi parmi les carraghénanes, les galactomannanes, les xanthanes et leurs mélanges.

6. Agent de pelliculage selon la revendication 5, caractérisé en ce qu'il contient de 5 à 30% en poids de carraghénane, par rapport à la gélatine.

7. Agent de pelliculage selon l'une des revendications 5 ou 6, caractérisé en ce qu'il contient de 0,5% à 2% en poids de carraghénane, de 10% à 30% en poids de polyol, de 6% à 10% en poids de gélatine, par rapport au poids de l'agent.

8. Agent de pelliculage selon l'une quelconque des revendications 1 à 4, caractérisé en ce que le polysaccharide est choisi parmi les sels d'acides alginiques, les pectines et leurs mélanges.

9. Agent de pelliculage selon la revendication 8, caractérisé en ce qu'il contient de 8% à 20% en poids d'alginate, par rapport à la gélatine.

10. Procédé d'enrobage de pièces alimentaires caractérisé en ce qu'on dépose sur la pièce par trempage, badigeonnage ou pulvérisation, un film d'un agent de pelliculage selon l'une quelconque des revendications 1 à 7, ledit agent de pelliculage se trouvant à une température supérieure à celle de sa gélification.

11. Procédé d'enrobage de pièces alimentaires caractérisé en ce qu'on dépose sur la pièce par trempage, badigeonnage ou pulvérisation un film d'un agent de pelliculage selon l'une des revendications 8 ou 9 et que l'on traite ensuite la pièce ainsi revêtue par une solution contenant des ions Ca$^{++}$.

12. Application des agents de pelliculage selon l'une quelconque des revendications 1 à 9 à la présentation et la conservation des aliments.

**Revendications pour l'Etat contractant suivant : ES**

1. Procédé d'enrobage de pièces alimentaires, caractérisé en ce qu'on dépose sur la pièce par trempage, badigeonnage ou pulvérisation, un film d'un agent de pelliculage alimentaire pelable à base de gélatine, d'un polysaccharide épaississant ou gélifiant et d'eau, contenant en poids 3 à 10 fois plus de gélatine que de polysaccharide et exempt d'huile, ledit agent de pelliculage se trouvant à une température supérieure à celle de sa gélification.

2. Procédé selon la revendication 1, caractérisé en ce que l'agent de pelliculage contient en outre un polyol plastifiant.

3. Procédé selon l'une des revendications 1 ou 2, caractérisé en ce que l'agent de pelliculage contient en outre des additifs alimentaires, choisis parmi les colorants alimentaires, les agents de conservation et les agents de sapidité.

4. Procédé selon l'une des revendications 2 ou 3, caractérisé en ce que l'agent de pelliculage contient un polyol qui est le glycérol ou le sorbitol.

5. Procédé selon l'une quelconque des revendications 1 à 4, caractérisé en ce que l'agent de pelliculage contient un polysaccharide choisi parmi les carraghénanes, les galactomannanes, les xanthanes et leurs mélanges.

6. Procédé selon la revendication 5, caractérisé en ce que l'agent de pelliculage contient de 5 à 30% en poids de carraghénane, par rapport à la gélatine.

7. Procédé selon l'une des revendications 5 ou 6, caractérisé en ce que l'agent de pelliculage contient de 0,5% à 2% en poids de carraghénane, de 10% à 30% en poids de polyol, de 6% à 10% en poids de gélatine, par rapport au poids de l'agent.

8. Procédé d'enrobage de pièces alimentaires, caractérisé en ce qu'on dépose sur la pièce par trempage, badigeonnage ou pulvérisation, un film d'un agent de pelliculage alimentaire pelable, à base de gélatine et d'un polysaccharide choisi parmi les sels d'acides alginiques, les pectines et leurs mélanges, contenant en poids 3 à 10 fois plus de gélatine que de polysaccharide et exempt d'huile, et que l'on traite ensuite la pièce ainsi revêtue par une solution contenant des ions Ca$^{++}$.

9. Procédé selon la revendication 8, caractérisé en ce que l'agent de pelliculage contient en outre un polyol plastifiant.

10. Procédé selon l'une des revendications 8 ou 9, caractérisé en ce que l'agent de pelliculage contient en outre des additifs alimentaires, choisis parmi les colorants alimentaires, les agents de conservation et les agents de sapidité.

11. Procédé selon l'une des revendications 9 ou 10, caractérisé en ce que l'agent de pelliculage contient un polyol qui est le glycérol ou le sorbitol.

12. Procédé selon l'une quelconque des revendications 8 à 11, caractérisé en ce que l'agent de pelliculage contient de 8 % à 20% en poids d'alginate, par rapport à la gélatine.

13. Application du procédé selon l'une quelconque des revendications 1 à 12 à la présentation et la conservation des aliments.

**Claims**
**Claims for the following Contracting States : DE, GB, FR, IT, NL, SE, CH/LI, BE, AT, LU, GR**

1. Peelable and edible film-coating agent based on gelatin, a thickening or gelling polysaccharide and water, characterized in that it comprises by weight 3 to 10 times more gelatin than polysaccharide and in that it is exempt from oil.

2. Film-coating agent according to claim 1, characterized in that it also contains a plasticizing polyol.

3. Film-coating agent according to one of claims 1 or 2, characterized in that it also contains food additives selected from edible dyestuffs, preservation agents and sapidity agents.

4. Film-coating agent according to any one of claims 2 or 3, characterized in that the polyol is glycerol or sorbitol.

5. Film-coating agent according to any one of claims 1 to 4, characterized in that the polysaccharide is selected from carragheenans, galactomannans, xanthans and mixtures thereof.

6. Film-coating agent according to claim 5, characterized in that it contains from 5 to 30% by weight of carragheenan with respect to the gelatin.

7. Film-coating agent according to one of claims 5 or 6, characterized in that it contains from 0.5% to 2% by weight of carragheenan, from 10% to 30% by weight of polyol, from 6% to 10% by weight of gelatin, with respect to the weight of the agent.

8. Film-coating agent according to any one of claims 1 to 4, characterized in that the polysaccharide is selected from the salts of alginic acids, pectins and mixtures thereof.

9. Film-coating agent according to claim 8, characterized in that it contains from 8% to 20% by weight of alginate with respect to the gelatin.

10. Process for coating pieces of food, characterized in that it comprises the step of depositing on the piece, by immersion, painting or spraying, a film of the film-coating agent according to any one of claims 1 to 7, said film-coating agent being at a temperature higher than that of its gelling.

11. Process for coating pieces of food, characterized in that it comprises the step of depositing on the piece, by immersion, painting or spraying, a film of a film-coating agent according to one of claims 8 or 9, and in that said coated piece is then treated with a solution containing $Ca^{++}$ ions.

12. Application of the film-coating agents according to any one of claims 1 to 9 to the presentation and preservation of foodstuffs.

**Claims for the following Contracting State : ES**

1. Process for coating pieces of food, characterized in that it comprises the step of depositing on the piece, by immersion, painting or spraying, a film of a peelable and edible film-coating agent based on gelatin, a thickening or gelling polysaccharide and water, comprising by weight 3 to 10 times more gelatin than polysaccharide and exempt from oil, said film-coating agent being at a temperature higher than that of its gelling.

2. Process according to claim 1, characterized in that the film-coating agent also contains a plasticizing polyol.

3. Process according to one of claims 1 or 2, characterized in that the film-coating agent also contains food additives selected from edible dyestuffs, preservation agents and sapidity agents.

4. Process according to one of claims 2 or 3, characterized in that the film-coating agent contains a polyol which is glycerol or sorbitol.

5. Process according to any one of claims 1 to 4, characterized in that the film-coating agent contains a polysaccharide selected from carragheenans, galactomannans, xanthans and mixtures thereof.

6. Process according to claim 5, characterized in that the film-coating agent contains from 5 to 30% by weight of carragheenan with respect to the gelatin.

7. Process according to one of claims 5 or 6, characterized in that the film-coating agent contains from 0.5% to 2% by weight of carragheenan, from 10% to 30% by weight of polyol, from 6% to 10% by weight of gelatin, with respect to the weight of the agent.

8. Process for coating pieces of food, characterized in that it comprises the step of depositing on the piece, by immersion, painting or spraying, a film of a peelable and edible film-coating agent based on gelatin and a polysaccharide selected from the salts of alginic acids, pectins and mixtures thereof, comprising by weight 3 to 10 times more gelatin than polysaccharide and exempt from oil and in that said coated piece is then treated with a solution containing $Ca^{++}$ ions.

9. Process according to claim 8, characterized in that the film-coating agent also contains a plasticizing polyol.

10. Process according to one of claims 8 or 9, characterized in that the film-coating agent also contains food additives selected from edible dyestuffs, preservation agents and sapidity agents.

11. Process according to one of claims 9 or 10, characterized in that the film-coating agent contains a polyol which is glycerol or sorbitol.

12. Process according to any one of claims 8 to 11, characterized in that the film-coating agent contains from 8% to 20% by weight of alginate with respect to the gelatin.

13. Application of the process according to any one of claims 1 to 12 to the presentation and preservation of foodstuffs.

**Patentansprüche**
**Patentansprüche für folgende Vertragsstaaten : DE, GB, FR, IT, NL, SE, CH/LI, BE, AT, LU, GR**

1. Abziehbares Überzugsmittel für Nahrungsmittel auf Basis von Gelatine, einem Verdickungs- oder Gelierungspolysaccharid und Wasser, dadurch gekennzeichnet, daß es gewichtsmäßig 3 bis 10mal mehr Gelatine als Polysaccharid enthält und frei von Öl ist.

2. Überzugsmittel nach Anspruch 1, dadurch gekennzeichnet, daß es weiters ein Weichmacherpolyol enthält.

3. Überzugsmittel nach einem der Ansprüche 1 oder 2, dadurch gekennzeichnet, daß es weiters Nahrungsmittelzusätze, ausgewählt aus Nahrungsmittelfarben, Konservierungsmitteln und Geschmacksmitteln, enthält.

4. Überzugsmittel nach einem der Ansprüche 2 oder 3, dadurch gekennzeichnet, daß das Polyol Glycerin oder Sorbit ist.

5. Überzugsmittel nach einem der Ansprüche 1 bis 4, dadurch gekennzeichnet, daß das Polysaccharid ausgewählt ist aus Karrageenanen, Galactomananen, Xanthanen und Mischungen davon.

6. Überzugsmittel nach Anspruch 5, dadurch gekennzeichnet, daß es 5 bis 30 Gew.% Karrageenan, bezogen auf die Gelatine, enthält.

7. Überzugsmittel nach einem der Ansprüche 5 oder 6, dadurch gekennzeichnet, daß es 0,5 bis 2 Gew.% Karrageenan, 10 bis 30 Gew.% Polyol, 6 bis 10 Gew.% Gelatine, bezogen auf das Gewicht des Mittels, enthält.

8. Überzugsmittel nach einem der Ansprüche 1 bis 4, dadurch gekennzeichnet, daß das Polysaccharid ausgewählt ist aus Algininsäuresalzen, Pektinen und Mischungen davon.

9. Überzugsmittel nach Anspruch 8, dadurch gekennzeichnet, daß es 8 bis 20 Gew.% Alginat, bezogen auf die Gelatine, enthält.

10. Verfahren zum Überziehen von Nahrungsmittelstücken, dadurch gekennzeichnet, daß ein Film aus einem Überzugsmittel nach einem der Ansprüche 1 bis 7 durch Eintauchen, Bepinseln oder Zerstäuben auf das Stück aufgebracht wird, wobei das Überzugsmittel eine Temperatur aufweist, die höher als seine Geliertemperatur ist.

11. Verfahren zum Überziehen von Nahrungsmittelstücken, dadurch gekennzeichnet, daß ein Film aus einem Überzugsmittel nach einem der Ansprüche 8 oder 9 durch Eintauchen, Bepinseln oder Zerstäuben auf das Stück aufgebracht wird und danach das so überzogene Stück mit einer $Ca^{++}$-Ionen enthaltenden Lösung behandelt wird.

12. Anwendung der Überzugsmittel nach einem der Ansprüche 1 bis 9 bei der Präsentation und Konservierung von Nahrungsmitteln.

**Patentansprüche für folgenden Vertragsstaat : ES**

1. Verfahren zum Überziehen von Nahrungsmittelstücken, dadurch gekennzeichnet, daß ein Film aus einem abziehbaren Speiseüberzugsmittel auf Basis von Gelatine, einem Verdickungs- oder Gelierungspolysaccharid und Wasser, das gewichtsmäßig 3 bis 10mal mehr Gelatine als Polysaccharid enthält und frei von Öl ist, durch Eintauchen, Bepinseln oder Zerstäuben auf das Stück aufgebracht wird, wobei das Überzugsmittel eine Temperatur aufweist, die höher als seine Geliertemperatur ist.

2. Verfahren nach Anspruch 1, dadurch gekennzeichnet, daß das Überzugsmittel weiters ein Weichmacherpolyol enthält.

3. Verfahren nach einem der Ansprüche 1 oder 2, dadurch gekennzeichnet, daß das Überzugsmittel weiters Nahrungsmittel-zusätze, ausgewählt aus Nahrungsmittelfarben, Konservierungsmitteln und Geschmacksmitteln, enthält.

4. Verfahren nach einem der Ansprüche 2 oder 3, dadurch gekennzeichnet, daß das Überzugsmittel ein Polyol, u.zw. Glycerin oder Sorbit, enthält.

5. Verfahren nach einem der Ansprüche 1 bis 4, dadurch gekennzeichnet, daß das Überzugsmittel ein Polysaccharid, ausgewählt aus Karrageenanen, Galactomananen, Xanthanen und Mischungen davon, enthält.

6. Verfahren nach Anspruch 5, dadurch gekennzeichnet, daß das Überzugsmittel 5 bis 30 Gew.% Karrageenan, bezogen auf die Gelatine, enthält.

7. Verfahren nach einem der Ansprüche 5 oder 6, dadurch gekennzeichnet, daß das Überzugsmittel 0,5 bis 2 Gew.% Karrageenan, 10 bis 30 Gew.% Polyol, 6 bis 10 Gew.% Gelatine, bezogen auf das Gewicht des Mittels, enthält.

8. Verfahren zum Überziehen von Nahrungsmittelstücken, dadurch gekennzeichnet, daß ein Film aus einem abziehbaren Speiseüberzugsmittel auf Basis von Gelatine und einem Polysaccharid, ausgewählt aus Algininsäuresalzen, Pektinen und Mischungen davon, das gewichtsmäßig 3 bis 10mal mehr Gelatine als Polysaccharid enthält und frei von Öl ist, durch Eintauchen, Bepinseln oder Zerstäuben auf das Stück aufgebracht wird, und danach das so überzogene Stück mit einer $Ca^{++}$-Ionen enthaltenden Lösung behandelt wird.

9. Verfahren nach Anspruch 8, dadurch gekennzeichnet, daß das Überzugsmittel weiters ein Weichmacherpolyol enthält.

10. Verfahren nach einem der Ansprüche 8 oder 9, dadurch gekennzeichnet, daß das Überzugsmittel weiters Nahrungsmittelzusätze, ausgewählt aus Nahrungsmittelfarben, Konservierungsmitteln und Geschmacksmitteln, enthält.

11. Verfahren nach einem der Ansprüche 9 oder 10, dadurch gekennzeichnet, daß das Überzugsmittel ein Polyol, u.zw. Glycerin oder Sorbit, enthält.

12. Verfahren nach einem der Ansprüche 8 bis 11, dadurch gekennzeichnet, daß das Überzugsmittel 8 bis 20 Gew.% Alginat, bezogen auf die Gelatine, enthält.

13. Anwendung der Verfahrens nach einem der Ansprüche 1 bis 12 bei der Präsentation und Konservierung von Nahrungsmitteln.